# EUROPÄISCHE PATENTSCHRIFT

(11) **EP 2 060 201 B1**
(45) Veröffentlichungstag und Bekanntmachung des Hinweises auf die Patenterteilung: **13.02.2013**
(21) Anmeldenummer: 09000395.5
(22) Anmeldetag: 20.12.2002
(51) Int. Cl.: A46B 9/06, A46B 15/00, A46B 7/00, A46D 3/04

(54) **Zahnbürste und Verfahren zur Herstellung einer solchen Zahnbürste**
Toothbrush and method for production of such a toothbrush
Brosse a dents et son procédé de fabrication

(30) Priorität: 28.12.2001 DE 10164336
(43) Veröffentlichungstag der Anmeldung: 20.05.2009
(62) Teilanmeldung aus: 06002599.6
(73) Patentinhaber: Trisa Holding AG, 6234 Triengen (CH)
(72) Erfinder: Fischer, Franz, 6234 Triengen (CH); Strähler, Reto, 6034 Adligenswil (CH)
(74) Vertreter: Schaad, Balass, Menzl & Partner AG

(56) Entgegenhaltungen:
- WO-A1-00/74522
- WO-A1-01/21036
- WO-A2-00/76369
- DE-C1- 19 600 767
- DE-C1- 19 818 553
- DE-U1- 20 006 311
- US-A- 2 476 201
- US-A- 5 802 656

## Beschreibung

Die Erfindung betrifft eine Zahnbürste gemäss dem Oberbegriff von Anspruch 1 und ein Verfahren zu deren Herstellung mit den Merkmalen von Anspruch 19.

Zahnbürsten mit einem konventionellen Borstenfeld bestehend aus Bündeln von Borstenfilamenten, z.B. aus Polyamid (PA) oder Polyester (PBT), und einer zusätzlichen weichelastischen Struktur sind zum Beispiel aus der WO 00/64307 und der WO 01/21036 bekannt. Die konventionellen Borsten dienen dabei zur gewöhnlichen Reinigung der Zähne, während die weichelastische Struktur unterschiedliche Funktionen erfüllen kann, z.B. Massage des Gaumens, Dämpfung der Putzbewegung, Entfernung von Zahnbelägen, Polieren der Zahnoberfläche, elastische Aufhängung der Borsten und/oder Abdichten ungeschweisster Stellen. Die WO 00/64307 offenbart eine Zahnbürste mit stabförmigen weichelastischen Reinigungselementen, die etwa dieselbe Länge wie die konventionellen Borstenbündel haben und peripher am Kopfteil der Zahnbürste angeordnet sind. Bei der WO 01/21036 sind elastische Reinigungselemente flächig, z.B. wellenförmig gestaltet, und innerhalb des konventionellen Borstenfelds angeordnet. Bei der WO 00/64307 sind mehrere der weichelastischen Reinigungselemente über eine Materialbrücke aus demselben Material miteinander verbunden. Die Reinigungselemente werden nach dem Beborsten des Kopfteils der Zahnbürste mit konventionellen Borsten durch Umspritzen des Kopfteils hergestellt. Nachteilig hieran ist, dass die Borstenfilamente vor der Herstellung der weichelastischen Struktur gebrauchsfertig gemacht werden müssen, z.B. durch Abrunden der Borstenbündel oder Herstellen einer vorbestimmten Profilierung. Anschliessend ist ein erneutes Einsetzen in das Spritzgiesswerkzeug zur Herstellung der weichelastischen Struktur notwendig. Dabei können die Borstenbündel beschädigt oder verschmutzt werden. Die herstellbaren Formen der weichelastischen Struktur sind unter anderem aus entformungstechnischen Gründen beschränkt.

Die Druckschrift DE 196 00 767 Cl offenbart eine Zahnbürste mit einem Stiel und an dem, dem Haltebereich des Stiels abgewandten Ende ein auswechselbares Borstenfeld, dessen Borsten an einer lösbar mit einem Aufnahmebereich des Stieles oder einer Verbreiterung des Stieles verbundenen Borstenplatte etwa rechtwinklig abstehen. An dem Aufnahmebereich oder gegebenenfalls an der Borstenplatte ist an den gegenseitigen Berührflächen oder Berührlinien eine gegenüber dem Werkstoff des Stieles und seines Aufnahmebereiches und/oder der Borstenplatte weichere Materialkomponente als Dichtung zum Beispiel im Zweikomponentenspritzgiessverfahren eingefügt, wobei dies auch eine Lochung für einen Ausdrückvorgang der Borstenplatte betreffen kann.

Die Druckschrift WO01/21036 A1 offenbart eine Zahnbürste mit einem Griff und einem Kopf, der aufrechte Borsten und mindestens ein Zahnpolierelement aufweist, wobei das Zahnpolierelement als rückstellfähiges wandartiges Bauteil ausgebildet ist und von Borsten flankiert ist.

Dir Druckschrift US 5,802,656 offenbart eine Zahnbürste mit einem Griff und einem Kopf der Borsten trägt. Der Kopf beinhaltet ein zentrales Gerüst, rückstellfähige Seitenbauteile die auf beiden Seiten des zentralen Gerüsts angeordnet sind, Aufnahmen für Borsten im Gerüst und den Seitenbauteilen und Borsten formende Borstenbüschel die in die Aufnahmen des Gerüsts und in die Seitenbauteile eingesetzt werden können.

Die Druckschrift DE 200 00 311 U1 offenbart eine Vorrichtung zum Verbinden von mit Borstenbüscheln versehenen Plättchen aus Kunststoff mit Bürstenkörpern aus, insbesondere demselben, Kunststoff mittels Ultraschallschweissen, dadurch gekennzeichnet, dass jeweils an einem zum Bürstenkörper weisen Umfangsrand des Plättchens eine Kante geformt ist, die beim Ultraschallschweissen als Energie-Konzentrator wirkt.

Der Erfindung liegt die Aufgabe zugrunde, eine Zahnbürste mit konventionellen Borsten und einer weichelastischen Struktur zur Verfügung zu stellen, die auf einfache Weise herstellbar ist. Des weiteren soll ein entsprechendes Herstellungsverfahren angegeben werden.

Die Aufgabe wird gelöst durch eine Zahnbürste mit den Merkmalen von Anspruch 1 sowie durch ein Verfahren zur Herstellung einer solchen Zahnbürste mit den Merkmalen von Anspruch 19. Vorteilhafte Weiterbildungen ergeben sich aus den abhängigen Ansprüchen, der Beschreibung und den Zeichnungen.

Erfindungsgemäss ist bei einer Zahnbürste der eingangs genannten Art wenigstens eine weichelastische Struktur, z.B ein Reinigungselement, an einem Trägerelement angeordnet, das aus einem Hartmaterial besteht. Dieses Trägerelement ist mit dem Kopfteil verbunden. Das Trägerelement und/oder die weichelastische Struktur weist Aussparungen auf, durch die die Borstenfilamente hindurchgeführt und zur Befestigung am Trägerelement mit ihren im Anwendungsfall dem Kopfteil zugewandten rückwärtigen Enden aufgeschmolzen, verschweisst oder verklebt sind. Diese AFT (Anchor Free Tufting) Technologie hat den Vorteil, dass sich weitgehend beliebige Borstenanordnungen, insbesondere auch flächige Borstengebilde, realisieren lassen. Das Trägerelement wird insbesondere mittels Ultraschallschweissen mit dem Kopfteil verbunden, z.B. wie in der DE 200 06 311 U beschrieben.

Eine solche Zahnbürste hat Vorteile bei der Herstellung, da das Zusatzteil, d.h. das mit der weichelastischen Struktur versehene Trägerelement, separat hergestellt und auf einfache Weise mit dem Kopfteil verbunden werden kann.

Die Verbindung des Trägerelements mit dem Kopfteil kann auf mechanischem Wege durch Verklemmen oder Verschnappen oder Nieten, chemisch durch Kleben, durch Ultraschallschweissen oder thermisch durch Schweissen oder sonstige Wärmezufuhren hergestellt werden. Herstellungstechnisch bevorzugt ist, dass das Trägerelement aus demselben Material wie das Kopfteil besteht, da in diesem Fall nur eine Hartkomponente zur Herstellung der Bürste bereitgehalten und nicht auf gegenseitige Materialverträglichkeit geachtet werden muss. Dies hat insbesondere beim Ultraschallschweissen Vorteile.

Die Anordnung der weichelastischen Struktur an einem aus einem Hartmaterial bestehenden Trägerelement hat folgende Vorteile: Das Zusatzteil kann separat vom übrigen Zahnbürstenkörper, bestehend aus Handgriff und Kopfteil, gefertigt und für den Endgebrauch vorbereitet werden. In einem einfachen weiteren Schritt erfolgt die Verbindung des Trägerelements mit dem Kopfteil, wobei sämtliche der genannten Verbindungstechniken verwendet werden können und das harte Trägerelement vorzugsweise daran angepasst geformt ist. Das Trägerelement kann beispielsweise so geformt werden, dass es im späteren Verbindungsschritt das Kopfteil in klemmender Weise umgreift. Das Zusatzteil ist aufgrund des harten Trägerelements auf einfache Weise zu handhaben und kann deutlich leichter gegriffen werden als ein vollständig aus einem weichelastischen Material hergestelltes Zusatzteil.

Das Zusatzteil ist im Verhältnis zur übrigen Zahnbürste klein. Daher sind auch die benötigten Werkzeuge klein und kostengünstig. Der Zahnbürstengrundkörper und die Beborstung kann auch bei späterer Ausstattung mit unterschiedlichen Zusatzteilen mit einem Standardwerkzeug hergestellt werden. Um Zahnbürsten mit unterschiedlichen Zusatzteilen herzustellen, muss lediglich das Zusatzteil bzw. das entsprechende Werkzeug dafür ausgetauscht werden, was auf einfache und kostengünstige Weise geschehen kann.

Ein weiterer Vorteil der separaten Herstellung von Zusatzteil und Grundkörper ist, dass beliebige Formen von weichelastischen Reinigungselementen realisiert werden können, z.B. auch solche, die die konventionellen Borsten kreuzen, berühren oder beim Einsetzen des Zusatzteils verdrängen. Durch die separate Herstellung ist die Entformung der weichelastischen Struktur unproblematisch. Es sind Geometrien im Spritzgiessverfahren herstellbar, die nur unter grossem Aufwand entformbar wären, wenn das Reinigungslement direkt auf dem beborsteten Kopfteil angebracht würde.

Bisher wurde die weichelastische Strukturaus herstellungstechnischen Gründen aus demselben Material wie etwaige weichelastische Komponenten am Griffteil hergestellt. Durch die Erfindung ergibt sich für das Material der Struktur eine grössere Freiheit, so dass beispielsweise ein anderer Härtegrad verwendet werden kann.

Durch eine unlösbare Verbindung des Zusatzteils mit dem Kopfteil wird verhindert, dass sich das Zusatzteil während des Gebrauchs ablöst, und die Verschluckungsgefahr ausgeschlossen.

Die konventionellen Borsten sind beispielsweise direkt am Kopfteil, an einer als weiteres Trägerelement wirkenden Borstenplatte oder auch am Trägerelement für die weichelastischen Reinigungselemente befestigt, wobei alle Varianten Vorteile aufweisen. Bei der Befestigung der Borsten am Kopfteil bzw. an der Borstenplatte können die weichelastische Struktur und die konventionellen Borsten vor dem Zusammensetzen von Kopfteil und Zusatzteil unabhängig voneinander für den späteren Gebrauch vorbereitet werden, so dass ein gegenseitiges Beschädigen oder Verschmutzen verhindert wird.

Das Anbringen von sowohl konventionellen Borsten als auch der weichelastischen Struktur am Trägerelement hat den Vorteil, dass eine beliebige räumliche Anordnung der beiden Komponenten möglich ist. Ein solches vorbereitetes Trägerelement kann zur Endfertigung mit verschiedenen Zahnbürstengrundkörpern verbunden werden, so dass mit wenigen Grundkörpern eine grosse Anzahl verschiedener Zahnbürsten realisierbar ist.

Die konventionellen Borsten können in beiden Fällen vor oder nach dem Anbringen der weichelastischen Struktur für den Gebrauch vorbereitet werden. Sind beide Komponenten am Trägerelement vorgesehen, wird bevorzugt zuerst die weichelastische Struktur, einschliesslich etwaiger Reinigungselemente, angeformt und das Trägerelement anschliessend mit Borsten besetzt, welche beispielsweise durch Aussparungen in der weichen oder harten Komponente hindurchgeführt sein können.

Die Herstellung des Zusatzteils, d.h. des Trägerelements mit einem oder mehreren weichelastischen Reinigungselementen, erfolgt bevorzugt im Zwei- oder Mehrkomponentenspritzgiessverfahren. Dabei wird vorzugsweise eine unlösbare Verbindung zwischen den Komponenten hergestellt.

Die weichelastische Struktur ist bevorzugt auch seitlich am Trägerelement angeordnet, z.B. angespritzt, wobei sie im montierten Zustand seitlich mit der Aussenkontur des Kopfteils abschliesst oder über diese hinausgeht. Sie dient z.B. zum Abdichten ungeschweisster Stellen, zum Massieren des Gaumens, z.B. durch angespitzte leicht abstehende elastische Elemente, oder als Aufprallschutz beim Putzen.

Vorzugsweise besteht das weichelastische Reinigungselement aus einem insbesondere thermoplastischen Elastomer, z.B. aus natürlichem oder synthetischem Gummi. Für das Trägerelement wird bevorzugt das für den Zahnbürstengrundkörper eingesetzte Material verwendet, insbesondere Polypropylen, Styrol-Acryl-Nitril, Polyester, Acryl-Nitril-Butadienstyrol (ABS) oder Isoplast®. Die Shore A Härte der weichen Komponente ist vorzugsweise geringer als 90 und liegt besonders bevorzugt unter 50.

Da sich gummielastisches Material, insbesondere ein thermoplastisches Elastomer, aufgrund der starken Dämpfung der Ultraschallschwingungen nur bedingt Ultraschall verschweissen lässt, wird die Schweissfläche zwischen Trägerelement und Kopfteil bevorzugt zumindest teilweise von der weichelastischen Komponente freigehalten. Vorzugsweise wird dazu der Anspritzpunkt der Weichkomponente an der borstentragenden Seite des Trägerelements gewählt, damit keine Materialbrücken aus der Weichkomponente die Schweissfläche verkleinern. Für den Fall, dass dennoch im Bereich der Schweissfläche weichelastische Elemente angeordnet werden sollen, wird deren Lage vorzugsweise seitlich von der Längsachse der Zahnbürste gewählt. Damit entstehen unverschweisste Stellen ebenfalls seitlich am Trägerelement, während der in Längsrichtung vordere und hintere Bereich zwischen Trägerelement und Kopfteil verschweisst werden kann. Somit ist ein guter Halt des Trägerelements gewährleistet, da durch die Putzbewegung und die entsprechenden Hebelkräfte vor allem der vordere bzw. hintere Bereich und weniger die Seitenbereiche belastet werden. Eine nur punktuelle Verschweissung mit ungeschweissten Stellen kann auch gezielt eingesetzt werden, damit Bürstenkopf und Trägerelement gegeneinander beweglich sind und so eine gewisse Flexibilität des gesamten Bürstenkopfes erreicht wird .

Die weichelastische Struktur kann nach Art einer Dichtlippe auch zum zusätzlichen Abdichten ungeschweisster Stellen dienen. Dadurch wird vorteilhaft der Raum zwischen dem Trägerelement und dem Kopfteil gegen das Eindringen von Wasser abgedichtet. Somit können sich in diesem Bereich keine Keime ansammeln, und die Bürste ist hygienischer. Um eine angemessene Dichtfunktion zu erreichen, ist die Shore A Härte der Weichkomponente vorzugsweise geringer als 50.

Beispiele für die Erfindung sind in den Zeichnungen dargestellt und nachfolgend beschrieben. Es zeigen rein schematisch:
- Fig. 1a-d: Ansichten einer erfindungsgemässen Zahnbürste in verschiedenen Montagestadien, wobei das Zusatzteil durch Nieten am Kopfteil befestigt wird;
- Fig. 2a-e: Ansichten einer weiteren Zahnbürste, deren Zusatzteil durch Nieten befestigt wird;
- Fig. 3a-e: Ansichten einer Zahnbürste, deren Zusatzteil durch Schweissen befestigt wird;
- Fig. 4a-e: Ansichten einer Zahnbürste, deren Zusatzteil mittels einer Schnappverbindung befestigt wird;
- Fig. 5a-e: Ansichten einer weiteren Zahnbürste, deren Zusatzteil durch eine Schnappverbindung befestigt wird;
- Fig. 6a-f: Ansichten einer Zahnbürste, bei der das Zusatzteil in klemmender Weise befestigt wird;
- Fig. 7a-e: die Herstellung einer Zahnbürste im AFT Verfahren;
- Fig. 8a-e: Ansichten einer weiteren Zahnbürste, deren Zusatzteil durch eine Schnappverbindung befestigt wird;
- Fig. 9a-f: Ansichten einer weiteren Zahnbürste, deren Zusatzteil mit Spiel am Kopfteil befestigt ist;
- Fig. 10a-j: die Herstellung einer weiteren Zahnbürste im AFT Verfahren;
- Fig. 11a-c: Ansichten einer Zahnbürste mit einer seitlichen

### Umrandung aus weichelastischem Material.

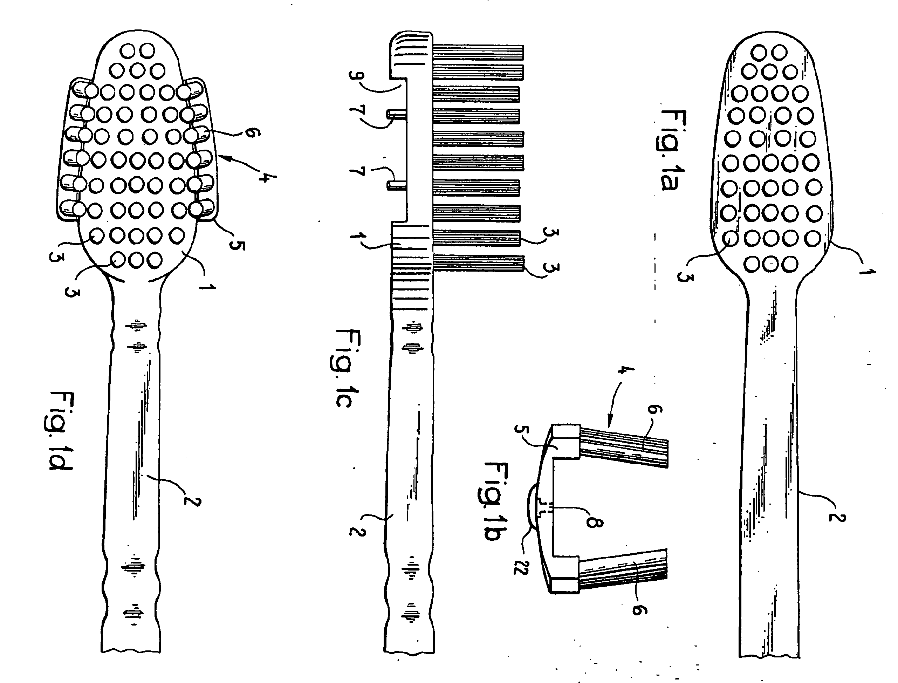

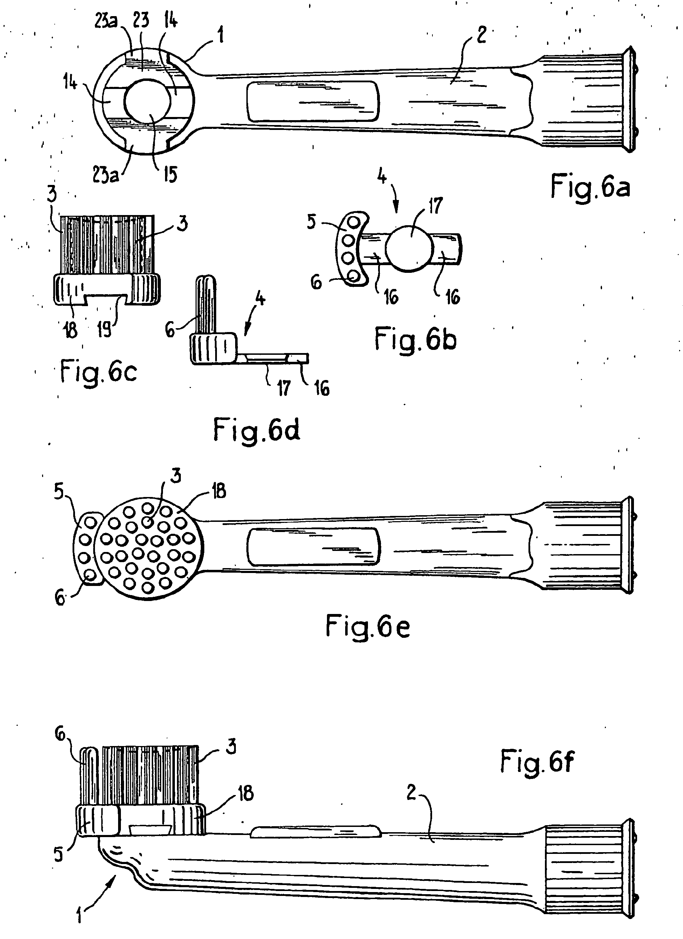

Alle dargestellten Zahnbürsten haben einen Grundkörper mit einem Kopfteil 1 und einem Griffteil 2, der nur teilweise dargestellt ist. Ein Zusatzteil 4 mit mehreren weichelastischen Reinigungselementen 6 unterschiedlicher Form, die mit einem Trägerelement ebenfalls unterschiedlicher Form verbunden sind, ist bei der fertigen Zahnbürste mit dem Kopfteil 1 verbunden. Das Kopfteil 1 ist des weiteren direkt (Fig. 1 - 5) bzw. indirekt (Fig. 6) mit Bündeln 3 aus konventionellen Borstenfilamenten versehen. Material und Anordnung der Borstenbündel 3 kann unterschiedlich sein. Im Folgenden wird nur auf die Besonderheiten der einzelnen Ausführungsbeispiele eingegangen. Dabei sind einander entsprechende Elemente mit gleichen Bezugszeichen bezeichnet.

Fig. 1a,c zeigt eine Zahnbürste, deren Kopfteil 1 bereits mit Borstenbündeln 3 versehen wurde. Das in Fig. 1b dargestellte Zusatzteil 4 hat ein im Schnitt U-förmiges Trägerelement 5 aus einem Hartmaterial, insbesondere demselben Kunststoff, der zur Herstellung des Kopfteils 1 bzw. des gesamten Grundkörpers verwendet wurde. Mit dem Trägerelement 5 sind weichelastische Reinigungselemente 6, hier in Form von geraden Stäben, fest verbunden. Die Reinigungselemente 6 sind leicht aus der Vertikalen aufeinander zu geneigt und schliessen mit der Vertikalen einen Winkel von 5 bis 30° ein. Auf diese Weise berühren die elastischen Reinigungselemente 6 die konventionellen Borstenbündel 3 (Fig. 1d) und können diese sogar kreuzen (nicht dargestellt). Eine derartige Stellung ist mit konventionellen Herstellungsverfahren nur mit aufwendigen Verdrängungstechniken realisierbar.

Das Trägerelement 5 ist in seiner Form an eine in Fig. 1c sichtbare Aussparung 9 im den Borstenbündeln 3 abgewandten Bereich des Kopfteils 1 angepasst. In diesem Bereich befinden sich des weiteren Stifte 7, die durch ein Loch 8 im Trägerelement 5 hindurchgesteckt werden können. Die Stifte 7 werden kalt oder warm verformt und so im Loch 8 dauerhaft fixiert. Eine Aufsicht auf die fertiggestellte Zahnbürste zeigt Fig. 1d.

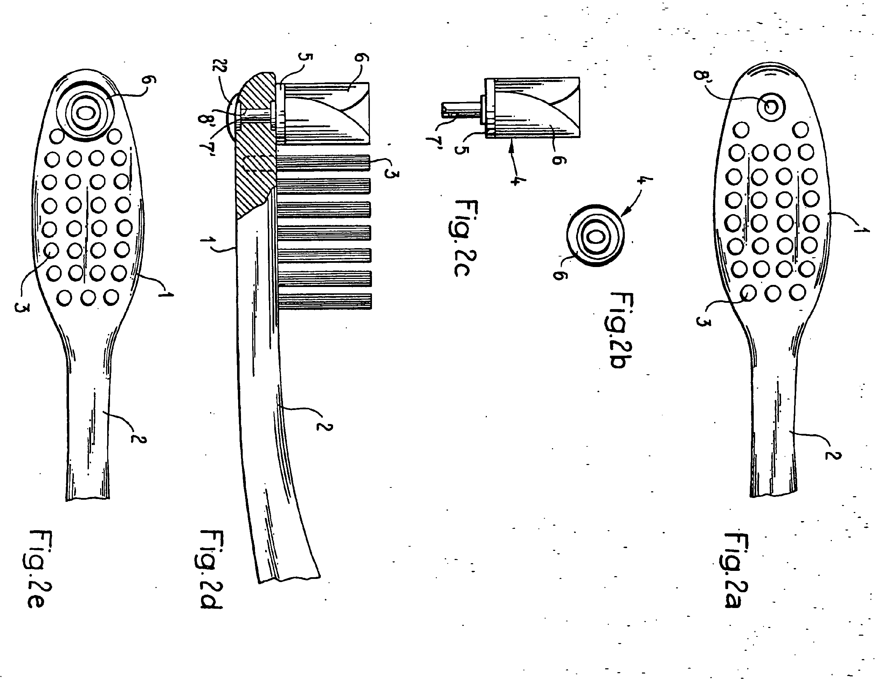

Der untere Bereich des Lochs 8 oder des gesamten Kopfteils 1 kann aus ästhetischen oder hygienischen Gründen durch eine Schutzschicht 22 aus weichem Kunststoff abgedeckt werden (vgl. Fig. 2d). Ebenso werden die Grenzbereiche zwischen dem Trägerelement 5 und dem Kopfteil 1 vorzugsweise durch weichen Kunststoff abgedeckt. Als Material hierfür wird beispielsweise das Weichmaterial verwendet, das auch für den Griffbereich der Zahnbürste verwendet wird. Vorzugsweise wird die Schutzschicht bereits während der Herstellung des Griffteils im Mehrkomponentenspritzgiessverfahren angespritzt. Die Kunststoffschicht kann jedoch auch direkt an das Trägerelement angeformt sein.

Ein weiteres Beispiel für eine Zahnbürste, deren Zusatzteil 4 durch eine Nietverbindung mit dem Kopfteil 1 verbunden wird, ist in Fig. 2a-e dargestellt. Das Zusatzteil besteht hier aus einem tellerförmigen Trägerelement 5, mit dem flächige weichelastische Reinigungselemente 6 rosettenförmig verbunden sind. Das Trägerelement 5 weist einen Stift 7' auf, mit dem das Zusatzteil 4 durch ein entsprechend vorbereitetes Loch 8' im vorderen Ende des Kopfteils durchgesteckt und durch Verformen des Stiftes 7' fixiert werden kann. Die weichelastischen Reinigungselemente 6 befinden sich im Bereich der Spitze des Kopfteils 1. In Richtung des Griffteils 2 schliesst sich das Borstenfeld mit einzelnen Borstenbündeln 3 an. Eine Schutzschicht 22 deckt den Bereich des Lochs 8' ab.

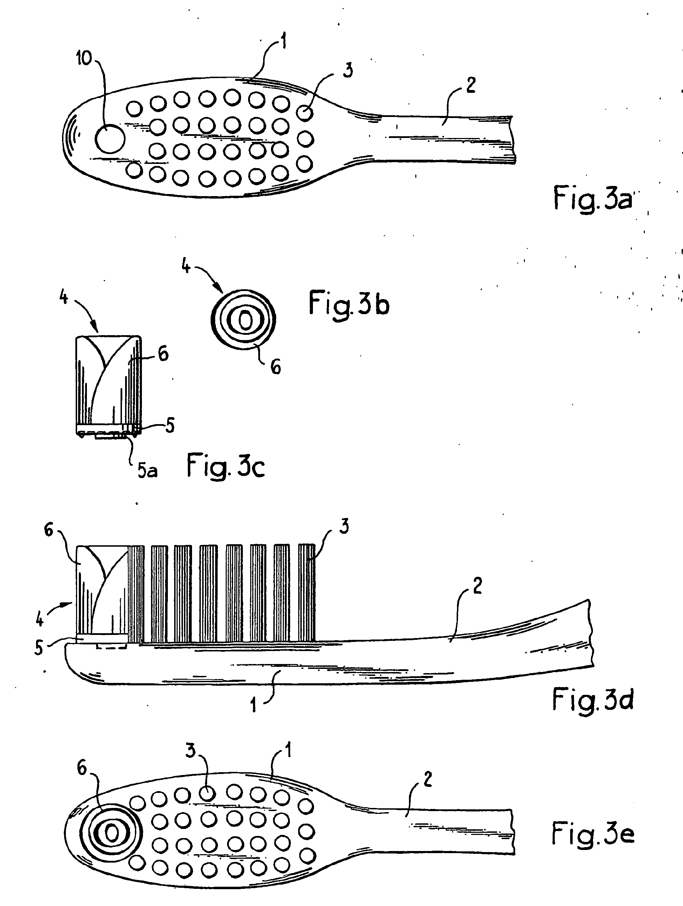

Fig. 3a-e zeigt ein weiteres Beispiel für eine Zahnbürste, die im Ergebnis einer Zahnbürste gemäss Fig. 2 ähnelt. Das Zusatzteil 4 mit einem tellerförmigen Trägerelement 5 und rosettenartigen weichelastischen Reinigungselementen 6 wird vorliegend mittels einer Schweissverbindung mit dem Kopfteil 1 verbunden. Dazu weist der vordere Bereich des Kopfteils eine tellerartige Aussparung auf, in die das Trägerelement 5 dank einer entsprechend strukturierten Unterseite 5a mittels Ultraschallschweissen dauerhaft eingefügt wird. Eine Seitenansicht der fertigen Zahnbürste zeigt Fig. 3d, die Aufsicht auf das kombinierte Borstenfeld aus konventionellen Borstenbündeln 3 und weichelastischen Reinigungselementen 6 zeigt Fig. 3e.

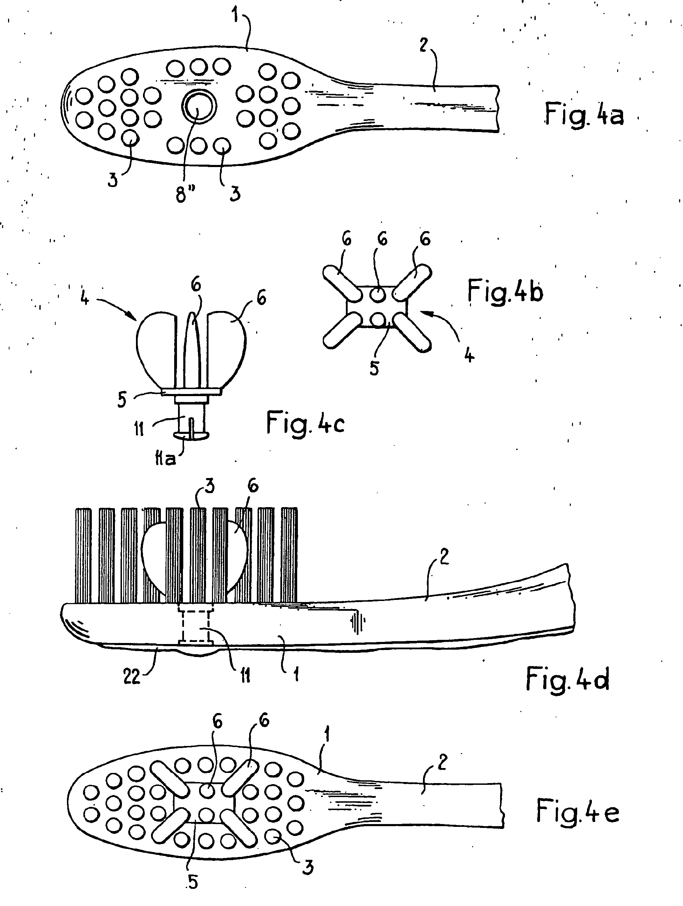

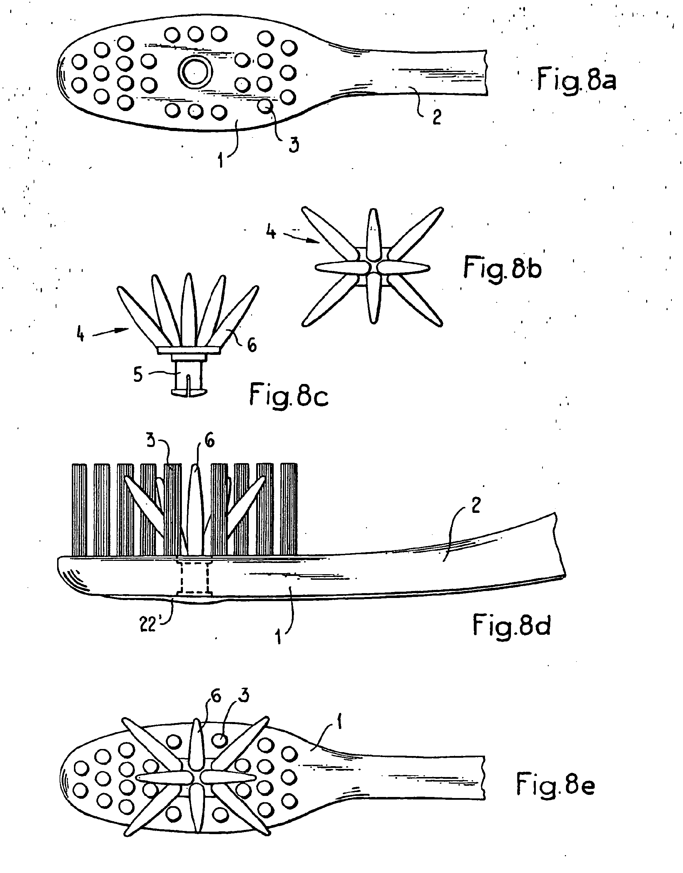

Das Zusatzteil 4 der in Fig. 4a-e dargestellten Zahnbürste ist mittels einer Schnappverbindung in der Mitte des Kopfteils 1 befestigt. Das Zusatzteil 4 umfasst ein rechteckiges Trägerelement 5, an dessen Ecken flügelartige weichelastische Reinigungselemente 6 angeordnet sind. Auf dem Trägerelement 5 befinden sich des weiteren zwei stabförmige Reinigungselemente 6 (Fig. 4b,c). Wie in Fig. 4a dargestellt, weist das Kopfteil 1 ein mittiges Loch 8'' auf, das zum Durchstecken eines federnd gestalteten Fortsatzes 11 am Trägerelement 5 dient. Zusatzteil 4 und Kopfteil 1 werden durch eine Schnappverbindung miteinander verbunden, die aufgrund des am unteren Ende 11a des Fortsatzes 11 vergrösserten Querschnitts nicht ohne weiteres lösbar ist. Das Borstenfeld der konventionellen Borstenbündel 3 ist derart konfiguriert, dass die flügelartigen Reinigungselemente 6 zwischen den konventionellen Borstenbündeln 3 Platz finden, wie in Fig. 4a und 4e dargestellt. Das Zusatzteil 4 wird separat gefertigt und anschliessend in das Kopfteil 1 mit dem vorbereiteten Borstenfeld eingesetzt. Dadurch können auch durch das konventionelle Borstenfeld durchgreifende Strukturen der weichelastischen Reinigungselemente 6 realisiert werden, wie die über Eck angeordneten flügelartigen Elemente aus Fig. 4b-e oder die in verschiedene Raumrichtungen weisenden, aufgefächerten stiftförmigen Reinigungselemente aus Fig. 8. Die Unterseite des Kopfteils 1 ist aus hygienischen oder ästhetischen Gründen durch eine Schicht 22 aus weichelastischem Material abgedeckt.

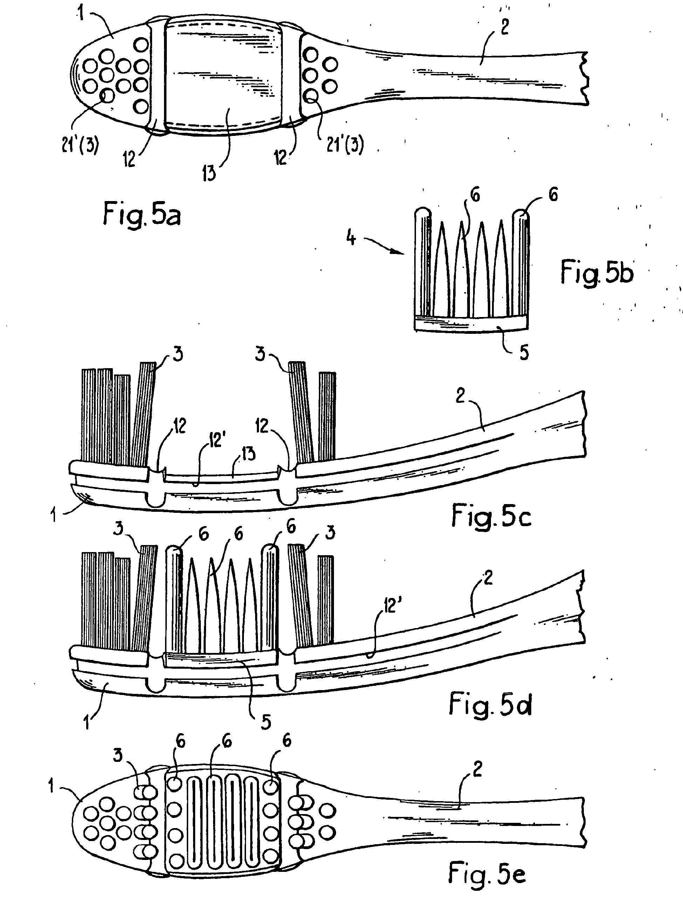

Fig. 5a-e zeigen ein weiteres Beispiel für eine Schnappverbindung zwischen dem Zusatzteil 4 und dem Kopfteil 1 einer erfindungsgemässen Zahnbürste. Das Kopfteil 1 weist innerhalb des Borstenfelds aus konventionellen Borstenbündeln 3 einen vorbereiteten Bereich 13 für die Aufnahme des Zusatzteils 4. Dieser Bereich 13 besteht aus einer Vertiefung, an deren Rand senkrecht zur Ausrichtung des Handgriffs 2 jeweils eine Nut 12 verläuft, die dem Kopfteil 1 wie auch die an seinem seitlichen Rand verlaufenden Nuten 12' eine gewisse Elastizität bzw. federnde Wirkung gibt. Der vorbereitete Bereich 13 ist geringfügig kleiner als die Grundfläche des Trägerelements 5, so dass dieses passend und in klemmender Weise in den Bereich 13 eingesetzt werden kann. Wie aus der Aufsicht in Fig. 5e erkennbar, hat das Zusatzteil sowohl stabförmige als auch flächige, quer zur Ausrichtung des Handgriffs 2 angeordnete Reinigungselemente.

Fig. 6a-f zeigt ein weiteres Beispiel für eine erfindungsgemässe Zahnbürste, hier eine Aufsteckzahnbürste für eine elektrisches Zahnreinigungsgerät. Die konventionellen Borstenbündel 3 sind an einer separaten Borstenplatte 18 befestigt, die im montierten Zustand mit dem daran angepassten Kopfteil 1 der Zahnbürste bzw. einer darauf dreh- oder schwenkbar befestigten Scheibe 23 verbunden ist. Die weichelastischen Reinigungselemente 6, hier stabförmig, sind an einem in der Aufsicht leicht gebogenen Trägerelement 5 befestigt, das einen flächigen Fortsatz 16 aufweist, der im wesentlichen senkrecht zur Ausrichtung der Reinigungselemente 6 orientiert ist. Mit diesem Fortsatz 16 lässt sich das Zusatzteil 4 in eine entsprechend geformte Nut 14 in der Scheibe 23 1 einführen. In der Mitte des Kopfteils 1 und der Nut 14 ist eine runde Aussparung 15 angeordnet, in die eine entsprechendes Gegenelement 17 am Fortsatz 16 des Zusatzteils 4 eingreift. Damit werden Zusatzteil 4 und Kopfteil 1 passend und in klemmender Weise miteinander verbunden. Die Borstenplatte 18 hat an ihrem unteren Ende eine Nut 19 mit der die Borstenplatte 18 an der Scheibe 23 bzw. deren seitlichen Fortsätzen 23 befestigt werden kann. Das Zusatzteil 4 wird in der dargestellten Ausführungsform durch die Scheibe 23 mitbewegt. Als Alternative kann das Zusatzteil 4 direkt am Kopfteil 1 befestigt werden und rotiert nicht mit.

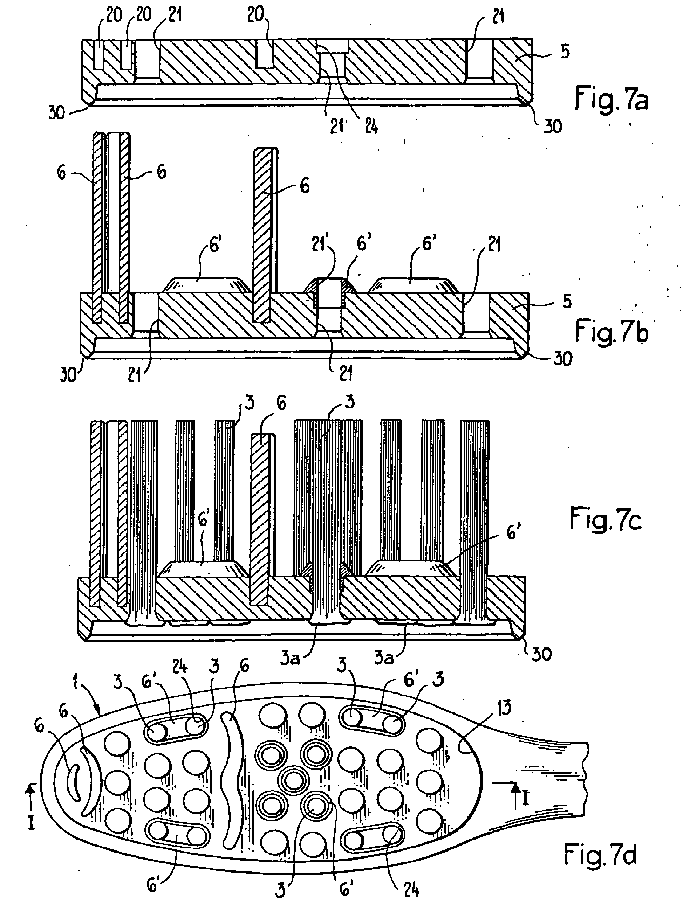

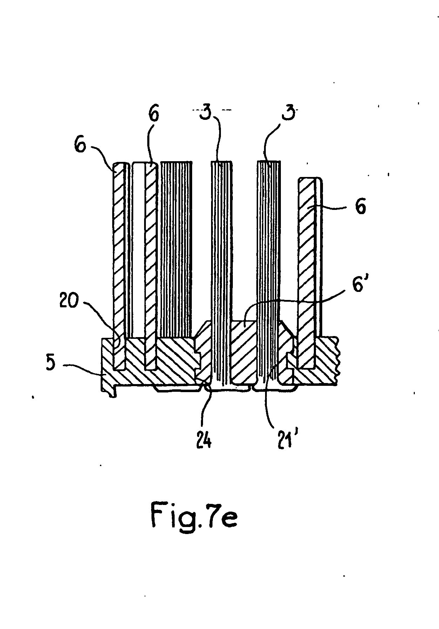

Figur 7a-e zeigen ein Beispiel für die Herstellung einer Zahnbürste mittels der AFT Technologie. Die Figuren 7a-c zeigen Schnittansichten des Trägerelements 5 in verschiedenen Verfahrensstadien, und zwar vor dem Bestücken mit weichelastischen Reinigungselementen 6 und konventionellen Borstenbündeln 3 (Fig. 7a), nach dem Aufbringen des weichelastischen Materials (Fig. 7b) und nach dem Aufbringen der Borsten (Fig. 7c). Das Trägerelement 5 ist in seiner äusseren Form an die Abmessungen eines vorbereiteten Bereichs 13 in Form einer flachen Aussparung im Kopfteil 1 der Zahnbürste angepasst. Das Trägerelement 5 weist vorbereitete Bereiche 20 auf, in die die weichelastischen Reinigungselemente 6 angebracht, insbesondere angespritzt, werden. Des weiteren hat das Trägerelement 5 Aussparungen 24, die ganz oder teilweise mit weichelastischem Material 6' gefüllt werden, vgl. auch die Detailzeichnung Fig. 7e. Des weiteren sind Löcher 21 im Trägerelement 5 vorhanden, durch die Borstenbündel 3 durchgesteckt und an der Rückseite durch Anschmelzen ihrer rückwärtigen Enden 3a befestigt werden. Die elastischen Materialbereiche 6' haben weitere Löcher 21', die ebenfalls zur Aufnahme von Borstenbündeln 3 dienen, welche auf die gleiche Art befestigt werden. Die Materialbereiche 6' können ein oder mehrere Borstenbündel 3 aufnehmen. Die im elastischen Material 6' verankerten Borstenbündel 3 sind daher besonders elastisch verankert bzw. aufgehängt. Weitere Borstenbündel 3 werden direkt auf dem Trägerelement 5 befestigt. Das mit Borstenbündeln und der weichelastischen Struktur 6, 6' bestückte Trägerelement 5 wird anschliessend in den vorbereiteten Bereich 13 eingesetzt.

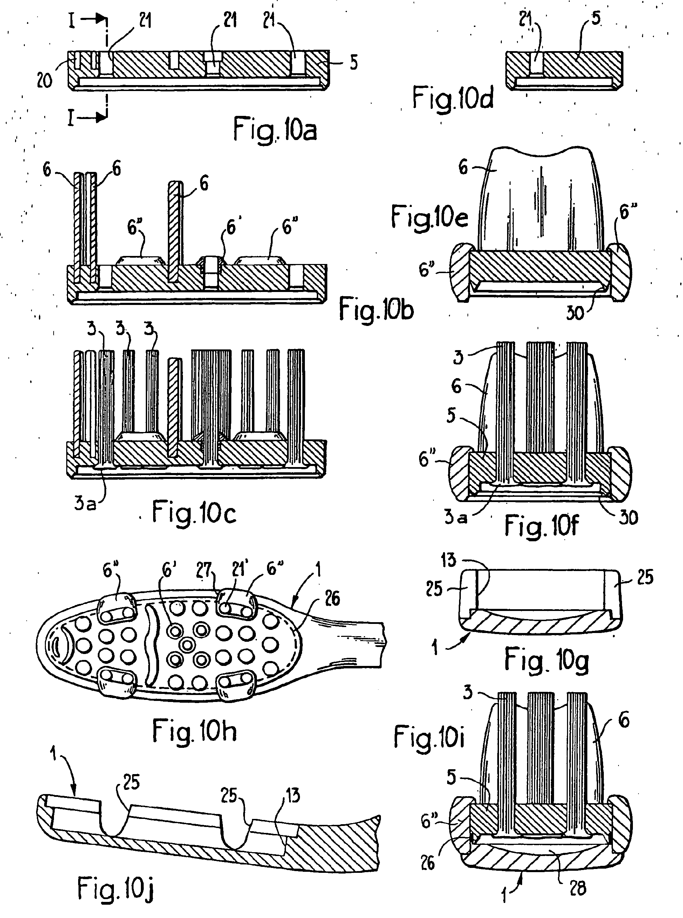

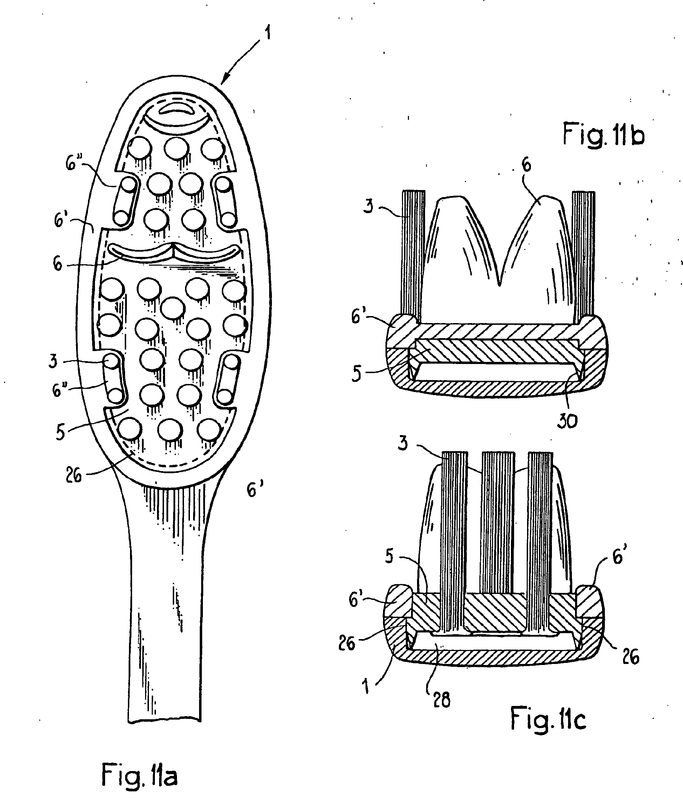

Die im Anwendungsfall dem Boden der Ausnehmung 13 zugewandte Kante 30 des Trägerelements 5 ist spitz gestaltet, ebenso im Beispiel aus Fig. 10 und 11. Diese spitz zulaufende Kante 30 dient beim Ultraschallschweissen zum Verbinden mit dem Kopfteil 1 als Energiekonzentrator sowie Materialreservoir für zu verflüssigendes Material.

Die AFT Technologie kommt ohne Anker oder Klammern zum Befestigen der Borstenfilamente aus, die stattdessen direkt an der Trägerplatte angeschweisst werden. Damit wird die Breite eines Borstenbündels nicht durch den Anker bestimmt, so dass sich auch feinere Strukturen, insbesondere auch flächige Borstenanordnungen, realisieren lassen.

Technisch ist es auch möglich, beim AFT-Verfahren die Borstenfilamente vor dem Anbringen an die Trägerplatte für den Gebrauch vorzubereiten. Realisiert wird derzeit jedoch die Variante, bei der die Borsten erst nach dem Anbringen an die Trägerplatte bearbeitet werden.

Fig. 8a-e zeigt eine Variante zur Zahnbürste aus Fig. 4. Das Borstenfeld aus konventionellen Borstenbündeln 3 entspricht Fig. 4. Das Zusatzteil 4 hat eine Mehrzahl von sternförmig auseinandergehenden stiftförmigen Reinigungselementen 6, die durch die konventionellen Borstenbündel 3 durchgreifen (Fig. 8d, e). Der Befestigungsmechanismus entspricht Figur 4. Eine Schicht 22 aus weichelastischem Material deckt die Unterseite des Kopf- und Griffteils 1,2 ab.

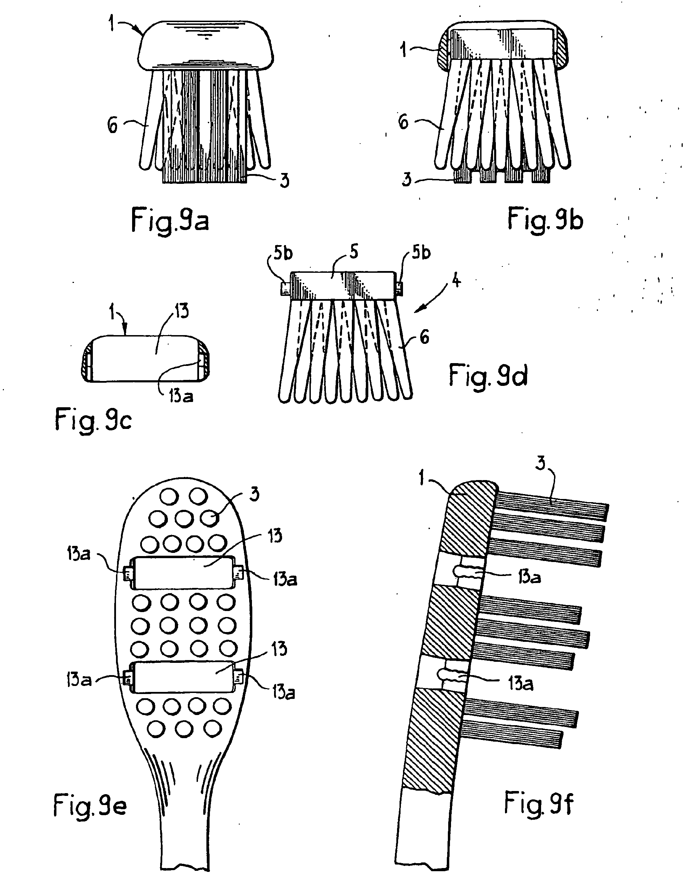

Fig. 9a-f zeigen ein weiteres Beispiel für eine erfindungsgemässe Zahnbürste. Das Kopfteil 1 weist einen vorbereiteten Bereich 13 für das Trägerelement 5 des Zusatzteils 4 auf, die grösser als das Trägerelement 5 selbst ist. Der Bereich 13 ist beispielsweise ein vollständig durch das Kopfteil 1 durchgehendes Loch, vgl. Schnittzeichnungen Fig. 9b,d,e. Der Bereich 13 hat zwei seitliche Nuten 13a, deren Form an die Form zweier seitlicher Fortsätze 5b des Trägerelements 5 angepasst ist. Dieses wird in das Kopfteil 1 eingesetzt und verrastet dort. Aufgrund des Spiels des Trägerelements 5 innerhalb des Bereichs 13, das ein seitliches Verschieben und/oder eine Schwenkbewegung um die durch die Fortsätze 5b definierte Achse ermöglicht, ergibt sich eine besondere Elastizität bzw. federnde Wirkung des Zusatzteils 4. Die Rückseite des Kopfteils 1 kann wiederum mit einer Schicht aus Weichmaterial abgedeckt sein.

Fig. 10a-j zeigt ein weiteres Beispiel für eine mittels AFT hergestellte Zahnbürste. Die Figuren 10a-c entsprechen den Figuren 7a-c und zeigen jeweils die Trägerplatte 5 in verschiedenen Verfahrensstadien. Fig. 10d-f zeigen die dieselbe Trägerplatte 5 im Schnitt entlang der in Fig. 10a angedeuteten Linie I-I. Das mittig angeordnete weichelastische Element 6 ist flächig bzw. segelartig und in der Aufsicht (Fig. 10h) wellenförmig. Wie in Fig. 10e+f dargestellt, umfasst die weichelastische Struktur seitlich angeformte Bereiche 6'', die im montierten Zustand (Fig. 10h) den Zahnbürstenkopf 1 seitlich begrenzen und mit der Aussenkontur des Kopfteils nahezu bündig abschliessen. Sie dienen beispielsweise als Aufprallschutz und/oder zur zusätzlichen Massage des Gaumens. Die Bereiche 6" weisen ebenfalls Löcher 21' auf zur Aufnahme von Borstenbündeln 3, die dadurch elastisch aufgehängt und beim Putzen besonders nachgiebig sind.

Das mit konventionellen Borsten 3 und der weichelastischen Struktur 6, 6', 6" versehene Trägerelement 5 wird in eine Ausnehmung 13 im Bürstenkopf 1 eingesetzt. Der Bürstenkopf 1 ist in Fig. 10g+j ohne Trägerelement 5 sowie in Fig. 10h+i mit eingesetztem Trägerelement 5 in verschiedenen Ansichten dargestellt. An seinem seitlichen Rand weist der Bürstenkopf 1 bzw. die Ausnehmung 13 seitliche Öffnungen 25 auf, die an die zuvor an das Trägerelement 5 angespritzten seitlichen weichelastischen Bereiche 6" angepasst sind.

Das Trägerelement 5 wird mittels Ultraschallschweissen mit dem Bürstenkopf 1 verbunden. Die Schweissfläche 26 ist gestrichelt angedeutet. Um die Verschweissung zu realisieren, weist das Trägerelement an seinem unteren Rand einen Schweissrand 26' auf, der bei der Montage auf dem Grund der Aussparung 13 aufliegt, wobei die Berührungsfläche die Schweissfläche 26 definiert. Der Schweissrand 26' schmilzt unter Ultraschalleinfluss, so dass die beiden Teile 5 und 1 miteinander verbunden werden.

Da sich gummielastisches Material nur bedingt Ultraschall schweissen lässt, wird die Schweissfläche 26 möglichst frei davon gehalten, wie z.B. bei der Zahnbürste aus Fig. 7, oder nur minimal unterbrochen, wie bei der Zahnbürste aus Fig. 10. Ziel ist in beiden Fällen die vollständige Abdichtung des Hohlraums 28 zwischen Trägerelement 5 und Kopfteil 1, um Eindringen von Wasser und Keimen zu verhindern. Bevorzugt wird dazu der Anspritzpunkt des weichelastischen Materials an der borstentragenden Vorderseite des Trägerelements 5 gewählt, damit keine unnötigen Materialbrücken die Schweissfläche 26 verkleinern. Falls weitere weichelastische Elemente am Kopfteil 1, insbesondere an dessen Rückseite, vorhanden sind, wird deren Lage so gewählt, dass sie die Schweissfläche 26 nicht verkleinern. Beispielsweise liegen sie und der entsprechende Anspritzpunkt vollständig innerhalb des durch die Schweissfläche 26 definierten Bereichs an der Rückseite des Kopfteils 1 (nicht dargestellt). Bevorzugt wird die gesamte Berührungsfläche zwischen Kopfteil 1 und Trägerelement 5 zu mindestens 25% verschweisst, besonders bevorzugt entlang des Kopfumfanges (Linie 26).

Im Beispiel aus Fig. 10 unterbrechen die weichelastischen Bereiche 6'' die Schweissfläche 26, so dass dort ungeschweissten Stellen 27 entstehen. Diese sind vorteilhaft an der Seite des Kopfteils 1 angeordnet, während die in Längsrichtung vorderen und hinteren Bereiche des Trägerelements 5 mit dem Kopfteil 1 fest verschweisst sind. Dadurch wird ein sicherer Halt des Trägerelements 5 gewährleistet, da durch die Putzbewegung und entsprechende Hebelkräfte der vordere und hintere Bereich der grössten Belastung ausgesetzt ist.

Die ungeschweissten Stellen 27 werden vorliegend durch die weichelastischen Bereiche 6" nach Art einer Dichtlippe abgedichtet, so dass kein oder nur wenig Wasser in den Hohlraum 28 eindringen kann. Für eine gute Dichtfunktion wird vorzugsweise Material mit einer Shore A Härte von 50 oder weniger gewählt. Ungeschweisste Stellen zwischen Kopfteil und Trägerelement können auch gezielt eingesetzt werden, um eine gewisse Flexibilität zwischen den beiden Hartkomponenten zu erreichen.

Fig. 11 zeigt ein weiteres Beispiel für eine im AFT-Verfahren hergestellte Zahnbürste mit zwei segelartigen weichelastischen Reinigungselementen 6 in verschiedenen Ansichten. Das Trägerelement 5 ist an seiner Peripherie vollständig mit weichelastischem Material 6' umgeben, das im montierten Zustand (Aufsichtdarstellung Fig 11a) das Kopfteil 1 an seinem äusseren Umfang an der Oberseite vollständig umschliesst und als Aufprallschutz dient. In Bereichen 6" dient das Weichmaterial als Halterung für seitliche Borstenbündel 3, die durch das weichelastische Material 6" hindurchgeführt sind.

Wie aus Fig. 11c hervorgeht, berühren sich die Hartkomponenten von Trägerelement 5 und Kopfteil 1 entlang einer Fläche 26 unterhalb der Weichkomponente im Bereich 6' und können hier mittels Ultraschall verschweisst werden. Die Schweissfläche 26 ist durch die seitlichen Bereiche 6'' unterbrochen, wobei jedoch, wie oben beschrieben, eine ausreichende Haltewirkung erzielt wird. Der Hohlraum 28 unterhalb des Trägerelements 5 wird durch die weichelastischen Bereiche 6'' und die entlang der Fläche 26 verschweissten Stellen abgedichtet.

Die oben mit Bezug auf Fig. 10 und 11 beschriebene Art der Verschweissung und Abdichtung der Komponenten kann mit Vorteil auch bei anderen Zahnbürsten eingesetzt werden.

## Patentansprüche

1. Zahnbürste, aufweisend einen Handgriff (2) und einen Kopfteil (1) mit Borstenfilamenten (3) und einer weichelastischen Struktur (6, 6', 6"), ein plattenförmiges Trägerelement (5), welches eine Vorder- und eine Rückseite sowie borstenaufnehmende Aussparungen (21, 21') aufweist, dadurch gekennzechnet, dass die weichelastische Struktur (6,6',6") an dem aus einem Hartmaterial bestehenden Trägerelement (5) angeordnet ist, das Trägerelement (5) aus einem härteren Material besteht als dasjenige der weichelastischen Struktur (6, 6', 6") und derart an den Kopfteil (1) angeschweisst ist, dass seine Rückseite dem Kopfteil (1) zugewandt ist, und Borstenfilamente (3), die durch die borstenaufnehmenden Aussparungen (21, 21') hindurchgeführt sind und deren rückwärtigen Enden (3a) an die Rückseite des Trägerelements (5) angeschmolzen, angeschweisst oder angeklebt sind, wobei eine Schweissfläche (26) zwischen dem Trägerelement (5) und dem Kopfteil (1) vom Material der weichelastischen Struktur (6, 6', 6") freigehalten ist und die weichelastische Struktur (6, 6', 6") wenigstens ein Reinigungselement umfasst, das aus thermoplastischen Elastomer besteht.

2. Zahnbürste gemäss Anspruch 1, **dadurch gekennzeichnet, dass** die weichelastische Struktur (6, 6', 6") am Trägerelement (5) befestigt ist, wobei die weichelastische Struktur (6, 6', 6") und das Trägerelement (5) durch ein Mehrkomponentenspritzgiessverfahren hergestellt und durch eine unlösbare Verbindung verbunden sind.

3. Zahnbürste gemäss Anspruch 2, **dadurch gekennzeichnet, dass** sich ein Anspritzpunkt für die Herstellung der weichelastischen Struktur (6, 6', 6")) an der Vorderseite des Trägerelements (5) befindet.

4. Zahnbürste gemäss einem der Ansprüche 1 bis 3, **dadurch gekennzeichnet, dass** der Kopfteil (1) eine an die Form des Trägerelements (5) angepasste Ausnehmung (13) zur Aufnahme des Trägerelements (5) aufweist und dass das Trägerelement (5) in diese Ausnehmung (13) eingesetzt und an den Kopfteil (1) angeschweisst ist.

5. Zahnbürste gemäss einem der Ansprüche 1 bis 4, **dadurch gekennzeichnet, dass** der Kopfteil (1) mindestens eine seitliche Öffnung (25) aufweist, deren Form an die am Trägerelement (5) angeordneten seitlichen weichelastischen Bereiche (6'') angepasst ist.

6. Zahnbürste gemäss einem der Ansprüche 1 bis 5, **dadurch gekennzeichnet, dass** an der Seite des Kopfteils (1) unverschweisste Stellen (27) vorhanden sind.

7. Zahnbürste gemäss einem der Ansprüche 1 bis 6, **dadurch gekennzeichnet, dass** flexible Bereiche die Schweissfläche (26) unterbrechen, so dass unverschweisste Stellen (27) vorhanden sind.

8. Zahnbürste gemäss Anspruch 7, **dadurch gekennzeichnet, dass** die in Längsrichtung vorderen und hinteren Bereiche des Trägerelementes (5) mit dem Kopfteil (1) fest verschweißt sind.

9. Zahnbürste gemäss einem der Ansprüche 1 bis 8, **dadurch gekennzeichnet, dass** die unverschweissten Stellen (27) zwischen dem Kopfteil (1) und dem Trägerelement (5) spezifisch dazu dienen, eine gewisse Flexibilität zwischen den zwei Hartkomponenten des Trägerelements (5) und des Kopfteils (1) zu gewährleisten.

10. Zahnbürste gemäss einem der Ansprüche 1 bis 9, **dadurch gekennzeichnet, dass** die unverschweissten Stellen (27) zwischen dem Kopfteil (1) und dem Trägerelement (5) dazu dienen, dass der Kopfteil (1) und das Trägerelement (5) im Verhältnis zueinander bewegt werden können.

11. Zahnbürste gemäss einem der Ansprüche 1 bis 10, **dadurch gekennzeichnet, dass** Verbindungsstellen zwischen dem Kopfteil (1) und dem Trägerelement (5) durch weichelastisches Material (6") abgedeckt sind.

12. Zahnbürste gemäss einem der Ansprüche 1 bis 11, **dadurch gekennzeichnet, dass** die weichelastische Struktur (6, 6', 6") aus einem thermoplastischen Elastomer besteht, das eine Shore A Härte von weniger als 90 hat.

13. Zahnbürste gemäss einem der Ansprüche 1 bis 12, **dadurch gekennzeichnet, dass** die weichelastische Struktur (6, 6', 6")mindestens ein weichelastisches Reinigungselement umfasst, das keine Borsten aufweist.

14. Zahnbürste gemäss einem der Ansprüche 1 bis 13, **dadurch gekennzeichnet, dass** mindestens eine der borstenaufnehmenden Aussparungen (21, 21') in der weichelastischen Struktur (6, 6', 6") angeordnet ist und Borstenfilamente (3) aufweist, die in der weichelastischen Struktur (6, 6', 6") flexibel verankert sind.

15. Zahnbürste gemäss einem der Ansprüche 1 bis 14, **dadurch gekennzeichnet, dass** eine Mehrzahl von borstenaufnehmenden Aussparungen (21, 21') in einem gemeinsamen Bereich der weichelastischen Struktur (6, 6', 6") angeordnet ist und Borstenfilamente (3) aufweist, so dass ein Bündel von benachbarten Borstenfilamenten (3) gebildet ist.

16. Zahnbürste gemäss einem der Ansprüche 1 bis 15, **dadurch gekennzeichnet, dass** die am Kopfteil (1) angeordnete weichelastische Struktur (6, 6', 6") und ein zugehöriger Anspritzpunkt dieser weichelastischen Struktur (6, 6', 6") auf der Rückseite des Kopfteils (1) innerhalb des durch die Schweissfläche (26) definierten Bereichs angeordnet sind.

17. Zahnbürste gemäss einem der Ansprüche 1 bis 16, **dadurch gekennzeichnet, dass** eine weichelastische Struktur (6, 6', 6") auf der Rückseite des Kopfteils (1) vollständig innerhalb des durch die Schweissfläche (26) definierten Bereichs angeordnet ist.

18. Zahnbürste gemäss einem der Ansprüche 1 bis 17, dadurch gekenzeichnet, dass das thermoplastische Elastomer ein natürlicher oder synthetischer Gummi ist.

19. Verfahren zu Herstellung einer Zahnbürste, umfassend, dass
ein Handgriff (2) und ein Kopfteil (1) bereitgestellt wird;
ein Trägerelement (5) bereitgestellt wird, welches eine Vorder- und eine Rückseite aufweist, **dadurch gekennzeichnet, dass** eine weichelastische Struktur (6, 6',6") an dem aus einem Hartmaterial bestehenden Trägerelement (5) befestigt wird, wobei das Trägerelement (5) aus einem härteren Material als demjenigen der weichelastischen Struktur (6, 6', 6") hergestellt ist;
eine Mehrzahl von Borstenfilamenten (3) bereitgstellt und durch borstenaufnehmende Aussparungen (21, 21') im Trägerelement (5) und/oder in der weichelastischen Struktur (6, 6', 6") hindurchgeführt werden;
die rückwärtigen Enden (3a) der Borsten an der Rückseite des Trägerelements (5) und/oder der weichelastischen Struktur (6, 6', 6'') durch Schmelzen, Schweissen oder Verkleben befestigt werden; dass
das Trägerelement (5) an den Kopfteil (1) angeschweisst wird, wobei eine Schweissfläche (26) zwischen dem Trägerelement (5) und dem Kopfteil (1) vom Material der weichelastischen Struktur (6, 6', 6") freigehalten wird und dass die weichelastische Struktur (6,6',6") wenigstens ein weichelatisches Reinigungselement umfasst, das aus einem thermoplastichen Elastomer besteht.

20. Verfahren gemäss Anspruch 19, **dadurch gekennzeichnet, dass** die Borstenfilamente (3) geschnitten und/oder abgerundet werden, bevor die Borsten am Trägerelement (5) und/oder an der der weichelastischen Struktur (6, 6', 6") befestigt werden und vor dem Befestigen des Trägerelements (5) am Kopfteil (1).

21. Verfahren gemäss Anspruch 19 oder 20, **dadurch gekennzeichnet, dass** die weichelastische Struktur (6, 6', 6") und das Trägerelement (5) im Zweikomponentenspritzgiessverfahren hergestellt werden, wobei eine unlösbare Verbindung zwischen der weichelastischen Struktur (6, 6', 6") und dem Trägerelement (5) hergestellt wird.

22. Verfahren gemäss Anspruch 21, **dadurch gekennzeichnet, dass** ein Anspritzpunkt für das weichelastische Material an der Vorderseite des Trägerelements (5) bereitgestellt wird.

23. Verfahren gemäss einem der Ansprüche 19 bis 22, **dadurch gekennzeichnet, dass** eine Berührungsfläche zwischen dem Kopfteil (1) und dem Trägerelement (5) zu wenigstens 25% verschweisst wird.

24. Verfahren gemäss einem der Ansprüche 19 bis 23,
**dadurch gekennzeichnet, dass** der Kopfteil (1) und
das Trägerelement (5) in den in Längsrichtung vorderen und hinteren Bereichen des Kopfteils (1) verschweisst werden, wobei gewisse Bereiche ungeschweisst gelassen werden.

25. Verfahren gemäss einem der Ansprüche 19 bis 24,
**dadurch gekennzeichnet, dass** der Kopfteil (1) und
das Trägerelement (5) entlang des Kopfumfangs des Trägerelements (5) verschweisst werden, wobei gewisse ungeschweisste Stellen ausgebildet werden.

26. Verfahren gemäss einem der Ansprüche 19 bis 25,
**dadurch gekennzeichnet, dass** der Kopfteil (1) und
das Trägerelement (5) entlang des Kopfumfangs des Trägerelements (5) verschweisst werden, wobei gewisse ungeschweisste Stellen ausgebildet werden,
so dass der Kopfteil (1) und das Trägerelement (5) im verhältnis zueinander bewegt werden können und
eine gewisse Flexibilität des Bürstenkopfe als Ganzes erzielt wird.

27. Verfahren gemäss einem der Ansprüche 19 bis 26,
**dadurch gekennzeichnet, dass** der Kopfteil (1) und
das Trägerelement (5) aus einer Hartkomponente, ausgewählt aus der Gruppe bestehend aus Polypropylen (PP), Polyester (PET) und AcrylNitril-Butadienstyrol (ABS) gebildet werden.

28. Verfahren gemäß einem der Ansprüche 19 bis 27, dadurch gekenzeichnet, dass das thermoplastiche Elastomer ein natürlicher oder synthetischer Gummi ist.

## Claims

1. Toothbrush having a handle (2) and a head part (1) with bristle filaments (3) and a flexible structure (6, 6', 6"), a plate-like carrier element (5), which has a front side and a rear side and bristle-accommodating cutouts (21, 21'), **characterized in that** the flexible structure (6, 6', 6") is arranged on the carrier element (5), which consists of a hard material, the carrier element (5) consists of a material which is harder than that of the flexible structure (6, 6', 6"), and it is welded to the head part (1) such that its rear side is directed towards the head part (1), and bristle filaments (3), which are guided through the bristle-accommodating cutouts (21, 21') and of which the rear ends (3a) are fused, welded or adhesively bonded to the rear side of the carrier element (5), wherein a welding surface (26) between the carrier element (5) and the head part (1) is kept free of the material of the flexible structure (6, 6', 6"), and the flexible structure (6, 6', 6") comprises at least one cleaning element, which consists of a thermoplastic elastomer.

2. Toothbrush according to Claim 1, **characterized in that** the flexible structure (6, 6', 6") is fastened on the carrier element (5), wherein the flexible structure (6, 6', 6") and the carrier element (5) are produced by multi-component injection moulding and are connected by a non-releasable connection.

3. Toothbrush according to Claim 2, **characterized in that** an injection point for the production of the flexible structure (6, 6', 6") is located on the front side of the carrier element (5).

4. Toothbrush according to one of Claims 1 to 3, **characterized in that** the head part (1) has a cutout (13) which is matched to the shape of the carrier element (5) and is intended for accommodating the carrier element (5), and **in that** the carrier element (5) is inserted into this cutout (13) and is welded to the head part (1).

5. Toothbrush according to one of Claims 1 to 4, **characterized in that** the head part (1) has at least one lateral opening (25) whose shape is matched to the lateral flexible regions (6") which are arranged on the carrier element (5).

6. Toothbrush according to one of Claims 1 to 5, **characterized in that** non-welded locations (27) are present on the side of the head part (1).

7. Toothbrush according to one of Claims 1 to 6, **characterized in that** flexible regions interrupt the welding surface (26), and therefore non-welded locations (27) are present.

8. Toothbrush according to Claim 7, **characterized in that** the regions of the carrier element (5) which are at the front and rear in the longitudinal direction are firmly welded to the head part (1).

9. Toothbrush according to one of Claims 1 to 8, **characterized in that** the non-welded locations (27) between the head part (1) and the carrier element (5) serve, specifically, to ensure a certain degree of flexibility between the two hard components of the carrier element (5) and of the head part (1).

10. Toothbrush according to one of Claims 1 to 9, **characterized in that** the non-welded locations (27) between the head part (1) and the carrier element (5) serve to allow the head part (1) and the carrier element (5) to move in relation to one another.

11. Toothbrush according to one of Claims 1 to 10, **characterized in that** connecting locations between the head part (1) and the carrier element (5) are covered by flexible material (6'').

12. Toothbrush according to one of Claims 1 to 11, **characterized in that** the flexible structure (6, 6', 6 ") consists of a thermoplastic elastomer, which has a Shore A hardness of less than 90.

13. Toothbrush according to one of Claims 1 to 12, **characterized in that** the flexible structure (6, 6', 6") comprises at least one flexible cleaning element, which has no bristles.

14. Toothbrush according to one of Claims 1 to 13, **characterized in that** at least one of the bristle-accommodating cutouts (21, 21') is arranged in the flexible structure (6, 6', 6") and has bristle filaments (3), which are anchored in a flexible manner in the flexible structure (6, 6', 6").

15. Toothbrush according to one of Claims 1 to 14, **characterized in that** a plurality of bristle-accommodating cutouts (21, 21') is arranged in a common region of the flexible structure (6, 6', 6") and has bristle filaments (3), and a cluster of adjacent bristle filaments (3) is therefore formed.

16. Toothbrush according to one of Claims 1 to 15, **characterized in that** the flexible structure (6, 6', 6"), which is arranged on the head part (1), and an associated injection point for this flexible structure (6, 6', 6'') are arranged on the rear side of the head part (1), within the region defined by the welding surface (26).

17. Toothbrush according to one of Claims 1 to 16, **characterized in that** a flexible structure (6, 6', 6") is arranged on the rear side of the head part (1), entirely within the region defined by the welding surface (26).

18. Toothbrush according to one of Claims 1 to 17, **characterized in that** the thermoplastic elastomer is a natural or synthetic rubber.

19. Method for producing a toothbrush, comprising the following steps:
providing a handle (2) and a head part (1);
providing a carrier element (5), which has a front side and a rear side,
**characterized in that**
a flexible structure (6, 6', 6") is fastened on the carrier element (5), which consists of a hard material,
wherein the carrier element (5) is produced from a material which is harder than that of the flexible structure (6, 6', 6'');
a plurality of bristle filaments (3) are provided and
are guided through bristle-accommodating cutouts (21, 21') in the carrier element (5) and/or in the flexible structure (6, 6', 6");
the rear ends (3a) of the bristles are fused, welded or
adhesively bonded to the rear side of the carrier element (5) and/or the flexible structure (6, 6', 6");
**in that**
the carrier element (5) is welded to the head part (1),
wherein a welding surface (26) between the carrier element (5) and the head part (1) is kept free of the material of the flexible structure (6, 6', 6"); and **in that**
the flexible structure (6, 6', 6") comprises at least one flexible cleaning element, which consists of a thermoplastic elastomer.

20. Method according to Claim 19, **characterized in that** the bristle filaments (3) are cut and/or rounded before the bristles are fastened on the carrier element (5) and/or on the flexible structure (6, 6', 6'') and before the carrier element (5) is fastened on the head part (1).

21. Method according to Claim 19 or 20, **characterized in that** the flexible structure (6, 6', 6") and the carrier element (5) are produced by a two-component injection-moulding process, with a non-releasable connection being established between the flexible structure (6, 6', 6 ") and the carrier element (5).

22. Method according to Claim 21, **characterized in that** an injection point for the flexible material is provided on the front side of the carrier element (5).

23. Method according to one of Claims 19 to 22, **characterized in that** a contact surface between the head part (1) and the carrier element (5) is welded over at least 25%.

24. Method according to one of Claims 19 to 23, **characterized in that** the head part (1) and the carrier element (5) are welded in the longitudinally front and rear regions of the head part (1), wherein certain regions are left non-welded.

25. Method according to one of Claims 19 to 24, **characterized in that** the head part (1) and the carrier element (5) are welded along the head circumference of the carrier element (5), wherein certain non-welded locations are formed.

26. Method according to one of Claims 19 to 25, **characterized in that** the head part (1) and the carrier element (5) are welded along the head circumference of the carrier element (5), wherein certain non-welded locations are formed, and therefore the head part (1) and the carrier element (5) can be moved in relation to one another and a certain degree of flexibility for the brush head as a whole is achieved.

27. Method according to one of Claims 19 to 26, **characterized in that** the head part (1) and the carrier element (5) are formed from a hard component selected from the group made up of polypropylene (PP), polyester (PET) and acrylonitrile-butadiene-styrene (ABS).

28. Method according to one of Claims 19 to 27, **characterized in that** the thermoplastic elastomer is a natural or synthetic rubber.

## Revendications

1. Brosse à dents présentant un manche (2) et une partie de tête (1) avec des filaments de poils (3) et une structure élastique souple (6, 6', 6"), un élément porteur en forme de plaque (5) qui présente un côté avant et un côté arrière ainsi que des évidements recevant des poils (21, 21'), **caractérisée en ce que** la structure élastique souple (6, 6', 6") est disposée sur l'élément porteur (5) se composant d'un matériau dur, l'élément porteur (5) se compose d'un matériau plus dur que celui de la structure élastique souple (6, 6', 6") et est soudé à la partie de tête (1) de telle sorte que son côté arrière soit tourné vers la partie de tête (1), et des filaments de poils (3) sont guidés à travers les évidements recevant des poils (21, 21'), dont les extrémités arrière (3a) sont fusionnées, soudées ou collées au côté arrière de l'élément porteur (5), une surface de soudage (26) entre l'élément porteur (5) et la partie de tête (1) étant maintenue exempte de matériau de la structure élastique souple (6, 6', 6") et la structure élastique souple (6, 6', 6") comprenant au moins un élément de nettoyage qui se compose d'un élastomère thermoplastique.

2. Brosse à dents selon la revendication 1, **caractérisée en ce que** la structure élastique souple (6, 6', 6") est fixée sur l'élément porteur (5), la structure élastique souple (6, 6', 6") et l'élément porteur (5) étant fabriqués par un procédé de moulage par injection à plusieurs composants et étant connectés par une connexion permanente.

3. Brosse à dents selon la revendication 2, **caractérisée en ce qu'**un point d'injection pour la fabrication de la structure élastique souple (6, 6', 6") se trouve sur le côté avant de l'élément porteur (5).

4. Brosse à dents selon l'une quelconque des revendications 1 à 3, **caractérisée en ce que** la partie de tête (1) présente un évidement (13) adapté à la forme de l'élément porteur (5) pour recevoir l'élément porteur (5) et **en ce que** l'élément porteur (5) est inséré dans cet évidement (13) et est soudé à la partie de tête (1).

5. Brosse à dents selon l'une quelconque des revendications 1 à 4, **caractérisée en ce que** la partie de tête (1) présente au moins une ouverture latérale (25) dont la forme est adaptée aux parties élastiques souples (6") latérales disposées sur l'élément porteur (5).

6. Brosse à dents selon l'une quelconque des revendications 1 à 5, **caractérisée en ce que** des points non soudés (27) sont prévus du côté de la partie de tête (1).

7. Brosse à dents selon l'une quelconque des revendications 1 à 6, **caractérisée en ce que** des parties flexibles interrompent la surface de soudage (26), de sorte que des points non soudés (27) soient présents.

8. Brosse à dents selon la revendication 7, **caractérisée en ce que** les parties avant et arrière, dans la direction longitudinale, de l'élément porteur (5) sont soudées fixement à la partie de tête (1).

9. Brosse à dents selon l'une quelconque des revendications 1 à 8, **caractérisée en ce que** les points non soudés (27) entre la partie de tête (1) et l'élément porteur (5) servent spécifiquement à garantir une certaine flexibilité entre les deux composants durs de l'élément porteur (5) et de la partie de tête (1).

10. Brosse à dents selon l'une quelconque des revendications 1 à 9, **caractérisée en ce que** les points non soudés (27) entre la partie de tête (1) et l'élément porteur (5) servent à permettre le déplacement l'un par rapport à l'autre de la partie de tête (1) et de l'élément porteur (5).

11. Brosse à dents selon l'une quelconque des revendications 1 à 10, **caractérisée en ce que** des points de connexion entre la partie de tête (1) et l'élément porteur (5) sont recouverts par un matériau élastique souple (6'').

12. Brosse à dents selon l'une quelconque des revendications 1 à 11, **caractérisée en ce que** la structure élastique souple (6, 6', 6") se compose d'un élastomère thermoplastique, qui a une dureté Shore A de moins de 90.

13. Brosse à dents selon l'une quelconque des revendications 1 à 12, **caractérisée en ce que** la structure élastique souple (6, 6', 6") comprend au moins un élément de nettoyage élastique souple, qui ne présente pas de poils.

14. Brosse à dents selon l'une quelconque des revendications 1 à 13, **caractérisée en ce qu'**au moins l'un des évidements (21, 21') recevant des poils est disposé dans la structure élastique souple (6, 6', 6") et présente des filaments de poils (3) qui sont ancrés de manière flexible dans la structure élastique souple (6, 6', 6").

15. Brosse à dents selon l'une quelconque des revendications 1 à 14, **caractérisée en ce qu'**une pluralité d'évidements recevant des poils (21, 21') est disposée dans une partie commune de la structure élastique souple (6, 6', 6") et présente des filaments de poils (3), de sorte qu'un faisceau de filaments de poils adjacents (3) soit formé.

16. Brosse à dents selon l'une quelconque des revendications 1 à 15, **caractérisée en ce que** la structure élastique souple (6, 6', 6") disposée sur la partie de tête (1) et un point d'injection associé de cette structure élastique souple (6, 6', 6") sont disposés sur le côté arrière de la partie de tête (1) à l'intérieur de la partie définie par la surface de soudage (26).

17. Brosse à dents selon l'une quelconque des revendications 1 à 16, **caractérisée en ce qu'**une structure élastique souple (6, 6', 6") est disposée sur le côté arrière de la partie de tête (1) complètement à l'intérieur de la partie définie par la surface de soudage (26).

18. Brosse à dents selon l'une quelconque des revendications 1 à 17, **caractérisée en ce que** l'élastomère thermoplastique est un caoutchouc naturel ou synthétique.

19. Procédé de fabrication d'une brosse à dents, comprenant ce qui suit :
un manche (2) et une partie de tête (1) sont fournis ;
un élément porteur (5) est fourni, lequel présente un côté avant et un côté arrière, **caractérisé en ce que** :
une structure élastique souple (6, 6', 6") est fixée sur l'élément porteur (5) constitué d'un matériau dur, l'élément porteur (5) étant fabriqué en un matériau plus dur que celui de la structure élastique souple (6, 6', 6") ;
une pluralité de filaments de poils (3) est fournie et est guidée à travers des évidements recevant des poils (21, 21') dans l'élément porteur (5) et/ou dans la structure élastique souple (6, 6', 6") ;
les extrémités arrière (3a) des poils sont fixées sur le côté arrière de l'élément porteur (5) et/ou de la structure élastique souple (6, 6', 6") par fusion, soudage ou collage ;
l'élément porteur (5) est soudé à la partie de tête (1), une surface de soudage (26) entre l'élément porteur (5) et la partie de tête (1) étant maintenue exempte de matériau de la structure élastique souple (6, 6', 6") et
la structure élastique souple (6, 6', 6") comprenant au moins un élément de nettoyage élastique souple qui se compose d'un élastomère thermoplastique.

20. Procédé selon la revendication 19, **caractérisé en ce que** les filaments de poils (3) sont coupés et/ou arrondis avant que les poils soient fixés sur l'élément porteur (5) et/ou sur la structure élastique souple (6, 6', 6") et avant la fixation de l'élément porteur (5) sur la partie de tête (1).

21. Procédé selon la revendication 19 ou 20, **caractérisé en ce que** la structure élastique souple (6, 6', 6 ") et l'élément porteur (5) sont fabriqués dans un procédé de moulage par injection à deux composants, une connexion permanente étant créée entre la structure élastique souple (6, 6', 6") et l'élément porteur (5).

22. Procédé selon la revendication 21, **caractérisé en ce qu'**un point d'injection pour le matériau élastique souple est prévu au niveau du côté avant de l'élément porteur (5).

23. Procédé selon l'une quelconque des revendications 19 à 22, **caractérisé en ce qu'**une surface de contact est soudée entre la partie de tête (1) et l'élément porteur (5), au moins sur 25%.

24. Procédé selon l'une quelconque des revendications 19 à 23, **caractérisé en ce que** la partie de tête (1) et l'élément porteur (5) sont soudés dans les parties avant et arrière, dans la direction longitudinale, de la partie de tête (1), certaines parties restant non soudées.

25. Procédé selon l'une quelconque des revendications 19 à 24, **caractérisé en ce que** la partie de tête (1) et l'élément porteur (5) sont soudés le long de la circonférence de la tête de l'élément porteur (5), certains points non soudés étant réalisés.

26. Procédé selon l'une quelconque des revendications 19 à 25, **caractérisé en ce que** la partie de tête (1) et l'élément porteur (5) sont soudés le long de la circonférence de la tête de l'élément porteur (5), certains points non soudés étant réalisés, de sorte que la partie de tête (1) et l'élément porteur (5) puissent être déplacés l'un par rapport à l'autre et qu'une certaine flexibilité de la tête de brosse dans son ensemble soit obtenue.

27. Procédé selon l'une quelconque des revendications 19 à 26, **caractérisé en ce que** la partie de tête (1) et l'élément porteur (5) sont formés par un composant dur choisi parmi le groupe constitué du polypropylène (PP), du polyester (PET), et de l'acrylonitrile butadiène styrène (ABS).

28. Procédé selon l'une quelconque des revendications 19 à 27, **caractérisé en ce que** l'élastomère thermoplastique est un caoutchouc naturel ou synthétique.
